# EUROPEAN PATENT SPECIFICATION

(11) **EP 4 443 837 B1**
(45) Date of publication and mention of the grant of the patent: **19.08.2026**
(21) Application number: 23166652.0
(22) Date of filing: 04.04.2023
(51) Int. Cl.: H04L 41/14, H04L 41/5009, H04L 41/50, H04L 43/0876

(54) **METHOD FOR USING A SERVICE ENABLER ARCHITECTURE LAYER FOR VERTICALS, SEAL, IN A VERTICAL APPLICATION LAYER, VAL, IMPLEMENTATION, SYSTEM OR TELECOMMUNICATIONS NETWORKS, NETWORK SLICE CAPABILITY ENABLEMENT SERVER OR APPLICATION DATA ANALYTICS ENABLEMENT SERVER, PROGRAM AND COMPUTER-READABLE MEDIUM**
VERFAHREN ZUR VERWENDUNG EINER DIENSTFREIGABE-ARCHITEKTURSCHICHT FÜR VERTIKAL-, SIEGEL-, VAL-, IMPLEMENTIERUNGS-, SYSTEM- ODER TELEKOMMUNIKATIONSNETZE
SERVEUR D'ACTIVATION DE DONNÉES D'APPLICATION, PROGRAMME ET SUPPORT LISIBLE PAR ORDINATEUR

(43) Date of publication of application: 09.10.2024
(73) Proprietor: Deutsche Telekom AG, 53113 Bonn (DE)
(72) Inventor: ALEKSIEV, Vasil, 1220 Wien (AT)
(74) Representative: Schwöbel, Thilo K.

(56) References cited:
- "3rd Generation Partnership Project; Technical Specification Group Services and System Aspects; Procedures for Application Data Analytics Enablement Service; (Release 18)", no. V0.4.0, 8 March 2023 (2023-03-08), pages 1 - 53, XP052283944, Retrieved from the Internet <URL:https://ftp.3gpp.org/Specs/archive/23_series/23.436/23436-040.zip 23436-040-rm.docx> [retrieved on 20230308]
- BERNT MATTSSON ET AL: "Slice configuration analytics and prediction", vol. 3GPP SA 6, no. Athens, GR; 20230227 - 20230303, 4 March 2023 (2023-03-04), XP052251979, Retrieved from the Internet <URL:https://www.3gpp.org/ftp/tsg_sa/WG6_MissionCritical/TSGS6_053_Athens/Docs/S6-230846.zip S6-230846_was_S6-230621_Slice configuration analytics and prediction-u.doc> [retrieved on 20230304]

## Description

### BACKGROUND

The present invention relates a method for using a service enabler architecture layer for verticals, SEAL, in a vertical application layer implementation, VAL implementation, for providing communication services to a user equipment, using a vertical application layer server via a telecommunications network, especially for supporting and providing slice usage statistics data regarding at least one network slice, wherein the user equipment is a vertical application layer user equipment comprising a vertical application layer client, VAL client, and a network slice capability enablement client, wherein the service enabler architecture layer for verticals comprises a network slice capability enablement server being responsible for or related to the at least one network slice.

Additionally, the present invention relates to a system or to a telecommunications networks for using a service enabler architecture layer for verticals, SEAL, in a vertical application layer implementation, VAL implementation, for providing communication services to a user equipment, using a vertical application layer server via the telecommunications network, especially for supporting and providing slice usage statistics data regarding at least one network slice, wherein the user equipment is a vertical application layer user equipment comprising a vertical application layer client, VAL client, and a network slice capability enablement client, wherein the service enabler architecture layer for verticals comprises a network slice capability enablement server being responsible for or related to the at least one network slice.

Additionally, the present invention relates to a network slice capability enablement server or to an application data analytics enablement server or to a user equipment provided for being used in an inventive system or telecommunications network.

Furthermore, the present invention relates to a program and to a computer-readable medium for using a user equipment in the framework of service enabler architecture layer for verticals according to the inventive method.

In conventionally known telecommunications networks, it is known to use a user equipment with a telecommunications network in relation to or in the framework of service enabler architecture layer for verticals, service enabler architecture layer for verticals, with standardization document TR 23.700-36 having been finalized regarding application architecture aspects, solutions and enhancements to service enabler architecture layer for verticals for application data analytics enablement service. This study identifies the application enabling layer platform architecture, capabilities, and services to support data analytics enablement at the application layer. In this context, an application data analytics enablement server, ADAES server, (being a part of service enabler architecture layer for verticals, SEAL) typically has connectivity with an operations and maintenance, OAM, entity or functionality and a network exposure function, NEF, of an involved 3GPP mobile communication network, and is typically able to provide - based on interaction via these interfaces - additional functionality towards the analytics customer, i.e. an entity or functionality that acts as service consumer of services provided by such an application data analytics enablement server.

However, in conventionally known mobile communication networks, while the application data analytics enablement server architecture is able to store historical data, especially in case that specific statistics information or performance or failure information is needed for a certain time window in the past, such information is not able to be provided according to the conventionally known framework of service enabler architecture layer for verticals and especially not for a network slice capability enablement server or its service customers; hence, once a specific check is needed - e.g. in case that a customer of an application service provider has complained about service degradation -, there is no possibility for such a network slice capability enablement server and/or its service consumer to perform such a check.

Document 3GPP TS 23.436 V0.4.0 (2023-03) Release 18 describes the Application Data Analytics Enablement (ADAE) service, in which an ADAE server provides application-layer analytics to consumers (VAL or NSCE) using a subscription/notification model. However, the problem of delivering slice-specific diagnostics to a VAL server on demand, in a synchronous request/response flow is not addressed.

Document 3GPP TSG-SA WG6 Meeting #53 adds a network slice usage pattern analytics feature to ADAE: an ADAE server collects slice data from OAM/NWDAF, and may store it in A-ADRF. However, the problem of providing on-demand, synchronous NSCE diagnostics to a VAL server is not addressed.

### SUMMARY

An object of the present invention is to provide a technically simple, effective and cost-effective solution for using a service enabler architecture layer for verticals, SEAL, in a vertical application layer implementation, VAL implementation, for providing communication services to a user equipment, using a vertical application layer server via a telecommunications network, especially for supporting and providing slice usage statistics data regarding at least one network slice. A further object of the present invention is to provide a corresponding system or a corresponding telecommunications networks or a corresponding network slice capability enablement server or a corresponding application data analytics enablement server or a corresponding user equipment, and a corresponding program and computer-readable medium.

The object of the present invention is achieved by a method according to claim 1.

According to the present invention, it is advantageously possible that the network slice capability enablement server supports and/or provides network slice diagnostics data towards its service customer, especially a vertical application layer server.
Hence, the use of a user equipment in relation to or in the framework of service enabler architecture layer for verticals, SEAL, is able to be improved according to the present invention.

According to the present invention, it is especially possible to support and provide network slice diagnostic data regarding at least one network slice, and to use a service enabler architecture layer for verticals, SEAL, in a vertical application layer implementation, VAL implementation, for providing communication services to a user equipment, using a vertical application layer server via a telecommunications network. According to the present invention, the service enabler architecture layer for verticals comprises a network slice capability enablement server being responsible for or related to the at least one network slice. In order to support to provide, by the network slice capability enablement server - especially using services provided by an application data analytics enablement server -, slice usage statistics data towards a network slice capability enablement service consumer entity, especially the vertical application layer server, the method comprises the following steps:
-- in a first step, the vertical application layer server transmits, to the network slice capability enablement server, a network slice diagnostics request in order to be provided with network slice diagnostics data,
-- in a second step, the network slice capability enablement server transmits, to the vertical application layer server, a network slice diagnostics response in order to receive the network slice diagnostics data.

This advantageously provides the possibility, according to the present invention, to provide procedures, service flows and APIs to use data provided by the network slice capability enablement server (towards its service customers, especially the vertical application layer server(s)), especially in case that specific statistics are needed for a certain time window in the past. Especially, these data are based - at least partly - on data initially provided by an application data analytics enablement architecture.

According to the present invention, the service enabler architecture layer for verticals and/or the network slice capability enablement server comprises a network slice capability enablement data repository function, wherein, in a third step subsequent to the first step and preceding the second step, the network slice capability enablement server transmits, to a network slice capability enablement data repository function, NDRF, a network slice data retrieval request in order to be provided with the requested data, and the network slice capability enablement data repository function transmits, to the network slice capability enablement server, a network slice data retrieval response in order to provide the requested data to the network slice capability enablement server.

It is thereby advantageously possible to realize and implement the inventive method in a comparatively simple and efficient manner. Especially, it is thereby advantageously possible to provide - in the second step - the network slice diagnostics data based on the data stored in the network slice capability enablement data repository function, without the need to request at an application data analytics enablement server and/or at an application data analytics enablement architecture.

Furthermore, it is advantageously possible and preferred according to the present invention that the vertical application layer server corresponds to a network slice capability enablement service consumer entity.

It is thereby advantageously possible to realize and implement the inventive method in a comparatively simple and efficient manner.

According to the present invention, it is furthermore advantageously possible and preferred that the service enabler architecture layer for verticals comprises an application data analytics enablement server, wherein, prior to the first step, and especially with the instantiation of the at least one network slice and/or based on request from the vertical application layer server, the network slice capability enablement server, or the network slice capability enablement data repository function, subscribes to an application data analytics enablement server, especially by means of a network slice usage analytics subscription request,
wherein based on such subscription the network slice capability enablement server, or the network slice capability enablement data repository function, receives network slice usage analytics data,
wherein especially such network slice usage analytics data, and especially the corresponding events, are recorded in the network slice capability enablement data repository function.

It is thereby advantageously possible to realize and implement the inventive method in a comparatively simple and efficient manner.

Furthermore, it is advantageously possible and preferred according to the present invention that, in a fourth step subsequent to the third step, the network slice capability enablement server correlates data and prepares a network slice diagnostics report, to be provided, especially as part of the network slice diagnostics response, to the vertical application layer server.

It is thereby advantageously possible to efficiently realize and implement the inventive method in a comparatively simple and flexible manner.

Furthermore, the present invention relates to a system according to claim 5.

Additionally, the present invention relates to a network slice capability enablement server such network slice capability enablement server being provided for or being configured such that it is able to be used in a system or in a telecommunications network according to the present invention.

Additionally, the present invention relates to a program according to claim 7 and to a computer-readable medium according to claim 8.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

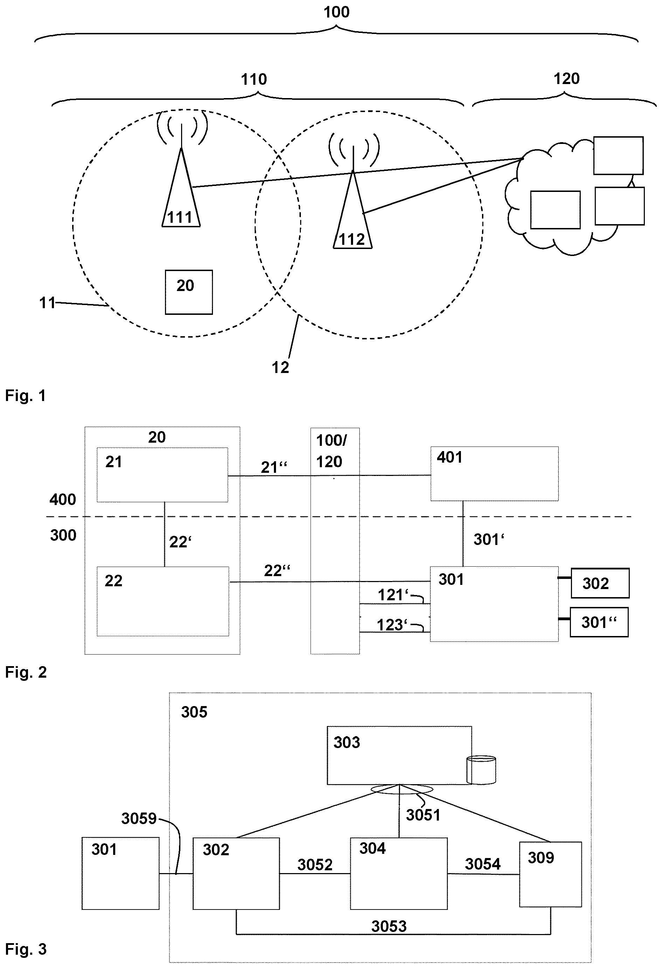

Figure 1 schematically illustrates a telecommunications network, comprising an access network and a core network, and a user equipment, wherein a service enabler architecture layer for verticals, SEAL, is used in a vertical application layer (VAL) implementation for providing communication services to a user equipment, using a vertical application layer server via the telecommunications network, especially for supporting and providing network slice diagnostics data regarding at least one network slice; the user equipment is a vertical application layer user equipment comprising a vertical application layer (VAL) client and a network slice capability enablement client, and the service enabler architecture layer for verticals comprises a network slice capability enablement server being responsible for or related to the at least one network slice.
Figure 2 schematically illustrates a representation of an exemplary implementation of the service enabler architecture layer for verticals for supporting and providing slice usage statistics data regarding at least one network slice with the user equipment being a vertical application layer user equipment comprising the vertical application layer (VAL) client and the network slice capability enablement client, and the service enabler architecture layer for verticals comprising the network slice capability enablement server.
Figure 3 schematically illustrates a representation of an exemplary application data analytics enablement architecture illustrating the application data analytics enablement framework (and especially realized as part of a data network or a data edge network), comprising - besides the application data analytics enablement server - an application layer-data collection and coordination function, A-DCCF, an application layer-analytics and data repository function, A-ADRF, as well as data sources.

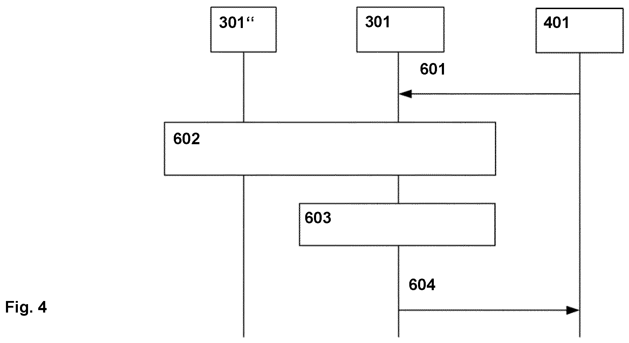

Figure 4 schematically illustrates a communication diagram between the application data analytics enablement server, the network slice capability enablement server, and the vertical application layer server.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100, comprising an access network 110 and a core network 120, and a user equipment 20 is schematically shown. A service enabler architecture layer for verticals, SEAL, is used in a vertical application layer (VAL) implementation for providing communication services to the user equipment 20, using a vertical application layer server (not explicitly and separately shown in Figure 1) via the telecommunications network 100, especially for supporting and providing slice usage statistics data regarding at least one network slice.

The user equipment 20 uses services provided by a vertical application layer, VAL, service provider domain or network slice capability enabler service provider being typically (but not necessarily) external to the telecommunications network 100, wherein the network slice capability enabler service provider comprises at least one network slice capability enablement server (not explicitly and separately shown in Figure 1) to provide services to the user equipment 20, especially using the telecommunications network 100.

The telecommunications network 100 is especially realized as mobile (cellular) communication network 100. The telecommunications network 100, especially its core network 120, typically comprises a number of network functions or services that are, however and for the sake of simplification, not explicitly and separately indicated, in Figure 1, by means of reference signs. The access network 110 of the telecommunications network 100 exemplary comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, the user equipment 20 (if connected to or with the telecommunications network 100) is connected, via a radio interface or air interface, to the first base station entity 111 of the access network 110 of the telecommunications network 100.

According to the present invention, the user equipment 20 is a vertical application layer user equipment 20, especially comprising a vertical application layer client (VAL client) - not explicitly and separately shown in Figure 1 by means of a reference sign - and a network slice capability enablement client (NSCE client) - likewise not separately shown in Figure 1 by means of a reference sign.
Furthermore, the user equipment 20 is typically, but not necessarily, mobile - i.e. able to move - with respect to the - typically, but not necessarily, static - radio cells 11, 12 or corresponding base station entities 111, 112 of the access network 110.
Especially, the user equipment 20 might comprise an application (not specifically depicted in Figure 1) as part of the user equipment 20; the application typically runs on the user equipment 20, i.e. the user equipment 20 typically runs or executes an operating system (such as a mobile (devices) operating system, e.g., android, iOS, iPadOS, etc.), and the application is running on the operating system; alternatively, the application might also be a lower level application not running on or as part of the operating system but as part of, e.g., the subscriber identity module of the user equipment 20.

According to the present invention, it is advantageously possible to use the user equipment 20 in relation to or in the framework of service enabler architecture layer for verticals, SEAL, with the first telecommunications network 100.
Typically, the telecommunications network 100 provides the user equipment 20 to use at least one (specific) network slice.

In Figure 2, a representation of an exemplary implementation of the service enabler architecture layer for verticals 300 and the vertical application layer 400, as well as their respective components and/or entities or functionalities - especially for supporting and providing slice usage statistics data regarding the at least one (specific) network slice -, is schematically shown. The user equipment 20 is represented as a vertical application layer user equipment 20 comprising the vertical application layer (VAL) client 21 and the network slice capability enablement client 22, and the service enabler architecture layer for verticals 300 comprising the network slice capability enablement server 301 (as well as the application data analytics enablement server 302). Between the vertical application layer (VAL) client 21 (of the user equipment 20) and the network slice capability enablement client 22 (of the user equipment 20), an interface or reference point 22' is realized, especially of the type NSCE-C (network slice capability enablement-client)

Between the vertical application layer server 401 and the vertical application layer (VAL) client 21 (of the user equipment 20), an interface or reference point 21" is realized, especially of the type VAL-UU; furthermore, between the network slice capability enablement client 22 and the network slice capability enablement server 301, an interface or reference point 22" is realized, especially of the type NSCE-UU.

The network slice capability enablement server 301, acting as application function (AF), especially communicates with the telecommunications network 100, especially its core network 120, i.e., typically, 5G core network functions, over the following interfaces or reference points towards network functions or services of the core network 120 (that are not explicitly shown in Figure 2): An N33/N5 reference point 121' to an network exposure function, NEF, of the core network 120 or for interactions with network functions or services such as the policy and charging function, PCF, network slice admission control function, NSACF, etc. The network slice capability enablement server 301 may also interact - using an interface or reference point 123' - with operations and maintenance system, OAM system, over the NSCE-OAM reference point, as consumer in both NSaaS and NOP model defined in the clause 4.1.6 and clause 4.1.7 of 3GPP TS 28.530 (for Network Slice Provisioning capabilities, Performance Assurance, Fault Supervision etc.). Typically, OAM interfaces and/or network slice information is able to be exposed to an authorized (trusted) third-party (NSCE) only after a contract has been signed between the MNO and this third-party.

According to the present invention, the service enabler architecture layer for verticals and/or the network slice capability enablement server 301 comprises a network slice capability enablement data repository function 301" that is able to store data such that the network slice capability enablement server 301 is able to provide - to especially the vertical application layer server 401 - network slice diagnostics data. Especially, the network slice capability enablement 301 and/or network slice capability enablement data repository function 301".

Especially according to the present invention, the vertical application layer server 401 can be understood as a vertical application layer network slice capability enablement service customer, and between the vertical application layer server 401 and the network slice capability enablement server 301, an interface or reference point 301' is realized, especially of the type NSCE-S (network slice capability enablement-server). Hence, the vertical application layer server 401 (or the vertical application layer servers) communicates with the network slice capability enablement server 301 over the NSCE-S reference point 301'.

Especially, the network slice capability enablement server 301 acts as an application data analytics enablement service consumer entity towards the application data analytics enablement server 302. In this case, the network slice capability enablement 301 especially uses a SEAL-X reference point (or interface) towards the application data analytics enablement server 302.

It is to be understood, that a plurality of vertical application layer servers (corresponding to the vertical application layer server 401) are able to be present and part of the vertical application layer 400 (but are not represented in Figure 2 for the sake of simplicity).

In Figure 3, a representation of an exemplary application data analytics enablement architecture 305 is shown, illustrating the application data analytics enablement framework and especially realized as part of a data network or a data edge network. The application data analytics enablement architecture 305, of course, comprises the application data analytics enablement server 302; besides the application data analytics enablement server 302, the application data analytics enablement architecture 305 comprises an application layer-data collection and coordination function, A-DCCF, 304, an application layer-analytics and data repository function, A-ADRF, 303, (comprising analytics and collected data especially relating to the performance and/or service level of one or a plurality of network slices, especially the (specific) network slice) as well as one or a plurality of further data sources 309. The application data analytics enablement architecture 305 (or the application data analytics enablement server 302) provides its services to an application data analytics enablement service consumer entity, especially the network slice capability enablement server 301. Thus, according to the present invention, it is advantageously possible that the application data analytics enablement server 302 supports and/or provides slice usage statistics data towards the network slice capability enablement server 301. Hence, the network slice capability enablement 301 is especially connected to the application data analytics enablement architecture 305 (or to the application data analytics enablement server 302) by means of using an interface or a reference point 3059 which especially corresponds to (or is of the type of) an ADAE-X or SEAL-X.
Between, on the one hand, the application layer-analytics and data repository function, A-ADRF, 303, and, on the other hand, the application data analytics enablement server 302, the application layer-data collection and coordination function, A-DCCF, 304, as well as the data source or data sources 309, an interface or reference point 3051 is realized, especially of the type A-ADRF-1.
Between the application data analytics enablement server 302 and the application layer-data collection and coordination function, A-DCCF, 304, an interface or reference point 3052 is realized, especially of the type ADAE-X; furthermore, between the application data analytics enablement server 302 and the data source(s) 309, an interface or reference point 3053 is realized, especially of the type ADAE-Y. Additionally, between the application layer-data collection and coordination function, A-DCCF, 304

In Figure 4, a communication diagram between the network slice capability enablement data repository function 301", the network slice capability enablement server 301, and the vertical application layer server 401 is schematically shown in order to illustrate further aspects of the method according to the present invention.
In case of the situation or the scenario shown in Figure 4, the vertical application layer server 401 interacts with the network slice capability enablement server 301, and it is the network slice capability enablement server 301 that provides the network slice diagnostics data.

In a first processing step 601, the vertical application layer server 401 transmits, to the network slice capability enablement server 301, a network slice diagnostics request in order to be provided with network slice diagnostics data.
The first processing step 601 corresponds to the first step of the method according to the present invention.
In a second processing step 602, (network) slice-specific application performance statistics and/or (network) slice usage pattern statistics (data), especially related to service degradation, are determined and collected from the network slice capability enablement data repository function 301". This is done by the network slice capability enablement server 301.
In a third processing step 603 (of the communication shown in Figure 4), the network slice capability enablement server 301 correlates data and prepares a network slice diagnostics report (that is also called - in the context of the present invention - a network slice diagnostics response).
In a fourth processing step 604 (of the communication shown in Figure 4), the network slice capability enablement server 301 transmits, to the vertical application layer server 401, a network slice diagnostics response (or the network slice diagnostics report) in order that the vertical application layer server 401 receives the network slice diagnostics data.
The fourth processing step 604 corresponds to the second step of the method according to the present invention.

Hence, according to the present invention, it is advantageously possible, by means of using network slice capability enablement data repository function 301", to retrieve statistics data or network slice diagnostics data, especially (network) slice-specific data, especially related to service degradation of network slices.

According to the present invention, it is advantageously possible to provide procedures, service flows and APIs to extract historical data from network slice capability enablement data repository function 301" - potentially based on using the application data analytics enablement architecture, ADAES architecture, especially in the A-ADRDF to which data subscription relations might exist from the network slice capability enablement 301 such that the network slice capability enablement data repository function 301" is able to store the (later) relevant data; hence, it is advantageously possible according to the present invention that network slice capability enablement data repository function 301" (via the network slice capability enablement server 301) provides the specific statistics are needed for a certain time window in the past.

Using the network slice capability enablement data repository function 301", the network slice capability enablement 301 is able to act as a service customer of the application data analytics enablement server 302 (i.e. an ADAES service consumer), e.g. by means of subscribing to (or for) specific analytics; hence the network slice capability enablement 301 (or the network slice capability enablement data repository function 301") is able to receive notifications according to its subscription, and - as the network slice capability enablement data repository function 301" provides the network slice capability enablement 301 with data storage for storing the specific notifications - it is advantageously possible for the network slice capability enablement 301 to provide the specific statistics or the network slice diagnostics data regarding a certain time window in the past. Hence, once a specific check is needed (e.g. in case that a customer of application service provider ASP, or vertical application layer server 401 has complained about a service degradation, especially one having occurred in the past) the present invention provides a possibility that the network slice capability enablement 301 is able to provide such data, especially historical data.

The vertical application layer server 401 corresponds to any vertical application layer server, i.e. it corresponds to a generic name for the server application function of a specific vertical application layer service. In this context, the vertical application layer service is a generic name for any service offered by a vertical application layer service provider to their vertical application layer users, i.e. the vertical application layer user equipments such as user equipment 20.
According to such a scenario or embodiment, the reference point N33 121' (between the core network 120 and the network slice capability enablement server 301 in Figure 2) supports the interactions between the network slice capability enablement server 301 and the network exposure function, NEF and is specified in 3GPP TS 23.501; this N33 interface or reference point is used for the network-based mechanism for slice re-mapping, where the network slice capability enablement server 301 is acting as application function (AF) and especially influences the user equipment route selection policy rules, URSP rules, for the application traffic per user equipment 20 by providing a guidance on the route selection parameters (especially including the S-NSSAI and DNN mapping), as specified in 3GPP TS 23.502 clause 4.15.6.10, 3GPP TS 23.503 clause 6.6.2.2, and 3GPP TS 23.548 clause 6.2.4.
The interface between the network slice capability enablement server 301 and the OAM system (of the core network 120) is generically referred to as NSCE-OAM reference point 123' (between the core network 120 and the network slice capability enablement server 301 shown in Figure 2). This reference point supports provisioning of management services as defined in clause 6.1, 3GPP TS 28.531.

According to the present invention, it is advantageously possible to address a situation such as: the vertical application layer server 401 or vertical/ASP service provider using the vertical application layer server 401 has estimated bad QoE (quality-of-experience) for a mobile user or service - e.g., either reported from a mobile user or service or detected by application, and the vertical application layer server 401 has identified that there is a specific event where the application has experienced service degradation (e.g. due to reported errors from the vertical application layer client 21 relating to a degraded service level (bad quality) and/or reported errors from application (such as, e.g., downgrade of communication, detected communication errors) and/or application fallback due to network slice communication service timeout).
According to the present invention, it is advantageously possible that, in such a situation, the vertical/ASP using the vertical application layer server 401 is able to get information from the network slice capability enablement service provider (slice service provider, i.e. the network slice capability enablement server 301) as to what is the reason/cause for the respective detected or reported bad service experience.
This is especially and advantageously possible, according to the present invention, by means of the network slice capability enablement server 301 providing specific procedures, information flows and APIs via which the vertical/ASP (or vertical application layer server 401) is able to request and receive the respective information: This means that, according to the present invention, the vertical application layer server 401 is able to send a request for information (network slice diagnostics request) about a specific event the vertical application layer server 401 has detected (corresponding to the first step of the inventive method). Then the network slice capability enablement server 301 (acting as application data analytics enablement service consumer entity and/or providing - by means of using the (or its) network slice capability enablement data repository function 301" - application data analytics enablement services or corresponding information) checks with the network slice capability enablement data repository function 301" about the specific reported error in a certain time window (of the past) and is able to reply back to the vertical application layer server 401 (network slice diagnostics reply), i.e. corresponding to the second step of the inventive method.

## Claims

1. Method for using a service enabler architecture layer for verticals, SEAL, in a vertical application layer implementation, VAL implementation, for providing communication services to a user equipment (20), using a vertical application layer server (401) via a telecommunications network (100), for supporting and providing network slice diagnostics data regarding at least one network slice, wherein the user equipment (20) is a vertical application layer user equipment (20) comprising a vertical application layer client, VAL client, (21) and a network slice capability enablement client (22),
wherein the service enabler architecture layer for verticals comprises a network slice capability enablement server (301) being responsible for the at least one network slice,
wherein between the vertical application layer server (401 ) and the vertical application layer client (21) an interface or reference point (21") is realized and between the network slice capability enablement client (22) and the network slice capability enablement server (301) a further interface or further reference point (22") is realized,
wherein the user equipment (20) uses services provided by a network slice capability enabler service provider, wherein the network slice capability enabler service provider comprises the network slice capability enablement server (301) to provide services to the user equipment (20),
wherein, in order for supporting and for providing, by the network slice capability enablement server (301), network slice diagnostics data towards the vertical application layer server (401), the method comprises the following steps:
-- in a first step, the vertical application layer server (401) transmits, to the network slice capability enablement server (301), a network slice diagnostics request in order to be provided with network slice diagnostics data,
-- in a second step, the network slice capability enablement server (301) transmits, to the vertical application layer server (401), a network slice diagnostics response in order to receive the network slice diagnostics data, wherein the first and second steps involve using the following information elements between the vertical application layer server (401) and the network slice capability enablement server (301):
-- as parts of the network slice diagnostics request: a vertical application layer information or vertical application layer server identifier information, a network slice diagnostics identifier information, a service degradation type information, a vertical application layer service identity information, an error list information, an error name information, a network slice related identifier information, a start time information, and an end time information,
-- as a part of the network slice diagnostics response: a result information, wherein the first and second steps optionally involve using the following information elements between the vertical application layer server (401) and the network slice capability enablement server (301):
-- as parts of the network slice diagnostics request: a user equipment-related identifier information, and an area of interest information,
-- as parts of the network slice diagnostic response: in case that network slice diagnostics was performed successfully, the network slice diagnostics identifier information, a start time information, an end time information, a data type information, a data output information, and/or, in case of a failure to perform the network slice diagnostics, a failure cause information,
wherein the method is **characterized in that** the service enabler architecture layer for verticals comprises a network slice capability enablement data repository function (301"), wherein, in a third step subsequent to the first step and preceding the second step, the network slice capability enablement server (301) transmits, to the network slice capability enablement data repository function, NDRF (301"), a network slice data retrieval request in order to be provided with the network slice diagnostics data requested by the network slice diagnostics request, and the network slice capability enablement data repository function (301") transmits, to the network slice capability enablement server (301), a network slice data retrieval response in order to provide the network slice diagnostics data requested by the network slice diagnostics request to the network slice capability enablement server (301).

2. Method according to claim 1, wherein the vertical application layer server (401) corresponds to a network slice capability enablement service consumer entity.

3. Method according to one of the preceding claims, wherein the service enabler architecture layer for verticals comprises an application data analytics enablement server (302), wherein, prior to the first step, and with the instantiation of the at least one network slice or based on request from the vertical application layer server (401), the network slice capability enablement server (301), or the network slice capability enablement data repository function (301"), subscribes to the application data analytics enablement server (302), by means of a network slice usage analytics subscription request,
wherein based on such subscription the network slice capability enablement server (301), or the network slice capability enablement data repository function (301"), receives network slice usage analytics data,
wherein such network slice usage analytics data, and corresponding events, are recorded in the network slice capability enablement data repository function (301").

4. Method according to one of the preceding claims, wherein, in a fourth step subsequent to the third step, the network slice capability enablement server (301) correlates data and prepares a network slice diagnostics report, to be provided, as part of the network slice diagnostics response (604), to the vertical application layer server (401).

5. System for using a service enabler architecture layer for verticals, SEAL, in a vertical application layer implementation, VAL implementation, for providing communication services to a user equipment (20), using a vertical application layer server (401) via the telecommunications network (100), for supporting and providing network slice diagnostics data regarding at least one network slice, wherein the system comprises the vertical application layer server (401) and a network slice capability enablement server (301), wherein the user equipment (20) is a vertical application layer user equipment (20) comprising a vertical application layer client, VAL client, (21) and a network slice capability enablement client (22),
wherein the service enabler architecture layer for verticals comprises the network slice capability enablement server (301) being responsible for the at least one network slice,
wherein between the vertical application layer server (401 ) and the vertical application layer client (21) an interface or reference point (21") is realized and between the network slice capability enablement client (22) and the network slice capability enablement server (301) a further interface or further reference point (22") is realized,
wherein the user equipment (20) uses services provided by a network slice capability enabler service provider, wherein the network slice capability enabler service provider comprises the network slice capability enablement server (301) to provide services to the user equipment (20),
wherein, in order for supporting and for providing, by the network slice capability enablement server (301), network slice diagnostics data towards the vertical application layer server (401), the system or telecommunications network (100) is configured such that:
-- the vertical application layer server (401) transmits, to the network slice capability enablement server (301), a network slice diagnostics request in order to be provided with network slice diagnostics data,
-- the network slice capability enablement server (301) transmits, to the vertical application layer server (401), a network slice diagnostics response comprising the network slice diagnostics data,
wherein the first and second steps involve using the following information elements between the vertical application layer server (401) and the network slice capability enablement server (301):
-- as parts of the network slice diagnostics request: a vertical application layer information or vertical application layer server identifier information, a network slice diagnostics identifier information, a service degradation type information, a vertical application layer service identity information, an error list information, an error name information, a network slice related identifier information, a start time information, and an end time information,
-- as a part of the network slice diagnostics response: a result information,
wherein the first and second steps optionally involve using the following information elements between the vertical application layer server (401) and the network slice capability enablement server (301):
-- as parts of the network slice diagnostics request: a user equipment-related identifier information, and an area of interest information,
-- as parts of the network slice diagnostic response: in case that network slice diagnostics was performed successfully, the network slice diagnostics identifier information, a start time information, an end time information, a data type information, a data output information, and/or, in case of a failure to perform the network slice diagnostics, a failure cause information,
wherein the service enabler architecture layer for verticals is **characterized in that** it comprises a network slice capability enablement data repository function (301"), wherein, in a third step subsequent to the first step and preceding the second step, the network slice capability enablement server (301) transmits, to the network slice capability enablement data repository function, NDRF (301"), a network slice data retrieval request in order to be provided with the network slice diagnostics data requested by the network slice diagnostics request, and the network slice capability enablement data repository function (301") transmits, to the network slice capability enablement server (301), a network slice data retrieval response in order to provide the network slice diagnostics data to the network slice capability enablement server (301).

6. Network slice capability enablement server (301) configured to be used in a system according to claim 5.

7. Program comprising a computer readable program code which, when executed in part on a network slice capability enablement server (301) and in part on a vertical application layer server (401), causes the network slice capability enablement server (301) and the vertical application layer server (401) to perform a method according one of claims 1 to 4.

8. Computer-readable medium comprising instructions which when executed in part on a network slice capability enablement server (301) and in part on a vertical application layer server (401), causes the network slice capability enablement server (301) and the vertical application layer server (401) to perform a method according to one of claims 1 to 4.

## Patentansprüche

1. Verfahren zur Verwendung einer Dienst-Aktivierungs-Architekturschicht für Vertikalen, SEAL, in einer VAL-Implementierung, für die Bereitstellung von Kommunikationsdiensten für ein Benutzergerät (20), unter Verwendung eines vertikalen Anwendungsschicht-Servers (401) über ein Telekommunikationsnetz (100), zur Unterstützung und Bereitstellung von Netzwerk-Slice-Diagnosedaten bezüglich mindestens eines Netzwerk-Slices, wobei das Benutzergerät (20) ein vertikales Anwendungsschicht-Benutzergerät (20) ist, das einen vertikalen Anwendungsschicht-Client, VAL-Client, (21) und einen Netzwerk-Slice-Fähigkeits-Aktivierungsclient (22) umfasst,
wobei die Dienst-Aktivierungs-Architekturschicht für Vertikalen einen Netzwerk-Slice-Fähigkeits-Aktivierungsserver (301) umfasst, der für den mindestens einen Netzwerk-Slice verantwortlich ist,
wobei zwischen dem vertikalen Anwendungsschicht-Server (401) und dem vertikalen Anwendungsschicht-Client (21) eine Schnittstelle oder ein Referenzpunkt (21") realisiert ist und zwischen dem Netzwerk-Slice-Fähigkeits-Aktivierungsclient (22) und dem Netzwerk-Slice-Fähigkeits-Aktivierungsserver (301) eine weitere Schnittstelle oder ein weiterer Referenzpunkt (22") realisiert ist,
wobei das Benutzergerät (20) Dienste nutzt, die von einem Netzwerk-Slice-Fähigkeitsaktivierungs-Dienstanbieter bereitgestellt werden, wobei der Netzwerk-Slice-Fähigkeitsaktivierungs-Dienstanbieter den Netzwerk-Slice-Fähigkeits-Aktivierungsserver (301) umfasst, um dem Benutzergerät (20) Dienste bereitzustellen,
wobei, zur Unterstützung und Bereitstellung von Netzwerk-Slice-Diagnosedaten durch den Netzwerk-Slice-Fähigkeits-Aktivierungsserver (301) gegenüber dem vertikalen Anwendungsschicht-Server (401), das Verfahren die folgenden Schritte umfasst:
- in einem ersten Schritt übermittelt der vertikale Anwendungsschicht-Server (401) an den Netzwerk-Slice-Fähigkeits-Aktivierungsserver (301) eine Netzwerk-Slice-Diagnoseanforderung, um mit Netzwerk-Slice-Diagnosedaten versorgt zu werden,
- in einem zweiten Schritt übermittelt der Netzwerk-Slice-Fähigkeits-Aktivierungsserver (301) an den vertikalen Anwendungsschicht-Server (401) eine Netzwerk-Slice-Diagnoseantwort, um die Netzwerk-Slice-Diagnosedaten zu empfangen, wobei der erste und der zweite Schritt die Verwendung der folgenden Informationselemente zwischen dem vertikalen Anwendungsschicht-Server (401) und dem Netzwerk-Slice-Fähigkeits-Aktivierungsserver (301) beinhalten:
- als Teile der Netzwerk-Slice-Diagnoseanforderung: eine vertikale Anwendungsschicht-Information oder vertikale Anwendungsschicht-Server-Bezeichner-Information, eine Netzwerk-Slice-Diagnose-Bezeichner-Information, eine Dienst-Degradierungstyp-Information, eine vertikale Anwendungsschicht-Dienst-Identitätsinformation, eine Fehlerlisten-Information, eine Fehlername-Information, eine netzwerkscheibenbezogene Bezeichner-Information, eine Startzeitinformation und eine Endzeitinformation,
- als Teil der Netzwerk-Slice-Diagnoseantwort: eine Ergebnisinformation,
wobei der erste und der zweite Schritt optional die Verwendung der folgenden Informationselemente zwischen dem vertikalen Anwendungsschicht-Server (401) und dem Netzwerk-Slice-Fähigkeits-Aktivierungsserver (301) beinhalten:
- als Teile der Netzwerk-Slice-Diagnoseanforderung: eine gerätebezogene Bezeichner-Information und eine Interessensgebiet-Information,
- als Teile der Netzwerk-Slice-Diagnoseantwort: für den Fall, dass die Netzwerk-Slice-Diagnose erfolgreich durchgeführt wurde, die Netzwerk-Slice-Diagnose-Bezeichner-Information, eine Startzeitinformation, eine Endzeitinformation, eine Datentypinformation, eine Datenausgabeinformation, und/oder, für den Fall, dass die Durchführung der Netzwerk-Slice-Diagnose fehlgeschlagen ist, eine Fehlerursachen-Information,
wobei das Verfahren **dadurch gekennzeichnet ist, dass** die Dienst-Aktivierungs-Architekturschicht für Vertikalen eine Netzwerk-Slice-Fähigkeits-Aktivierungs-Datenspeicherfunktion (301") umfasst, wobei in einem dritten Schritt, der auf den ersten Schritt folgt und dem zweiten Schritt vorausgeht, der Netzwerk-Slice-Fähigkeits-Aktivierungsserver (301) an die Netzwerk-Slice-Fähigkeits-Aktivierungs-Datenspeicherfunktion, NDRF (301"), eine Netzwerk-Slice-Datenabrufanforderung übermittelt, um mit den Netzwerk-Slice-Diagnosedaten versorgt zu werden, die durch die Netzwerk-Slice-Diagnoseanforderung angefordert wurden, und die Netzwerk-Slice-Fähigkeits-Aktivierungs-Datenspeicherfunktion (301") an den Netzwerk-Slice-Fähigkeits-Aktivierungsserver (301) eine Netzwerk-Slice-Datenabrufantwort übermittelt, um die durch die Netzwerk-Slice-Diagnoseanforderung angeforderten Netzwerk-Slice-Diagnosedaten dem Netzwerk-Slice-Fähigkeits-Aktivierungsserver (301) bereitzustellen.

2. Verfahren nach Anspruch 1, wobei der vertikale Anwendungsschicht-Server (401) einer Netzwerk-Slice-Fähigkeitsaktivierungs-Dienstverbrauchereinheit entspricht.

3. Verfahren nach einem der vorhergehenden Ansprüche, wobei die Dienst-Aktivierungs-Architekturschicht für Vertikalen einen Anwendungsdatenanalytik-Aktivierungsserver (302) umfasst, wobei, vor dem ersten Schritt und mit der Instanziierung des mindestens einen Netzwerk-Slices oder basierend auf einer Anforderung des vertikalen Anwendungsschicht-Servers (401), der Netzwerk-Slice-Fähigkeits-Aktivierungsserver (301) oder die Netzwerk-Slice-Fähigkeits-Aktivierungs-Datenspeicherfunktion (301") mittels einer Netzwerk-Slice-Nutzungsanalytik-Abonnierungsanforderung den Anwendungsdatenanalytik-Aktivierungsserver (302) abonniert,
wobei der Netzwerk-Slice-Fähigkeits-Aktivierungsserver (301) oder die Netzwerk-Slice-Fähigkeits-Aktivierungs-Datenspeicherfunktion (301") auf Grundlage dieses Abonnements Netzwerk-Slice-Nutzungsanalytikdaten empfängt,
wobei solche Netzwerk-Slice-Nutzungsanalytikdaten und entsprechende Ereignisse in der Netzwerk-Slice-Fähigkeits-Aktivierungs-Datenspeicherfunktion (301") aufgezeichnet werden.

4. Verfahren nach einem der vorhergehenden Ansprüche, wobei in einem vierten Schritt, der auf den dritten Schritt folgt, der Netzwerk-Slice-Fähigkeits-Aktivierungsserver (301) Daten korreliert und einen Netzwerk-Slice-Diagnosebericht erstellt, der als Teil der Netzwerk-Slice-Diagnoseantwort (604) dem vertikalen Anwendungsschicht-Server (401) bereitgestellt wird.

5. System zur Verwendung einer Dienst-Aktivierungs-Architekturschicht für Vertikalen, SEAL, in einer VAL-Implementierung, für die Bereitstellung von Kommunikationsdiensten für ein Benutzergerät (20), unter Verwendung eines vertikalen Anwendungsschicht-Servers (401) über das Telekommunikationsnetz (100), zur Unterstützung und Bereitstellung von Netzwerk-Slice-Diagnosedaten bezüglich mindestens eines Netzwerk-Slices, wobei das System den vertikalen Anwendungsschicht-Server (401) und einen Netzwerk-Slice-Fähigkeits-Aktivierungsserver (301) umfasst, wobei das Benutzergerät (20) ein vertikales Anwendungsschicht-Benutzergerät (20) ist, das einen vertikalen Anwendungsschicht-Client, VAL-Client, (21) und einen Netzwerk-Slice-Fähigkeits-Aktivierungsclient (22) umfasst,
wobei die Dienst-Aktivierungs-Architekturschicht für Vertikalen den Netzwerk-Slice-Fähigkeits-Aktivierungsserver (301) umfasst, der für den mindestens einen Netzwerk-Slice verantwortlich ist,
wobei zwischen dem vertikalen Anwendungsschicht-Server (401) und dem vertikalen Anwendungsschicht-Client (21) eine Schnittstelle oder ein Referenzpunkt (21") realisiert ist und zwischen dem Netzwerk-Slice-Fähigkeits-Aktivierungsclient (22) und dem Netzwerk-Slice-Fähigkeits-Aktivierungsserver (301) eine weitere Schnittstelle oder ein weiterer Referenzpunkt (22") realisiert ist,
wobei das Benutzergerät (20) Dienste nutzt, die von einem Netzwerk-Slice-Fähigkeitsaktivierungs-Dienstanbieter bereitgestellt werden, wobei der Netzwerk-Slice-Fähigkeitsaktivierungs-Dienstanbieter den Netzwerk-Slice-Fähigkeits-Aktivierungsserver (301) umfasst, um dem Benutzergerät (20) Dienste bereitzustellen,
wobei, zur Unterstützung und Bereitstellung von Netzwerk-Slice-Diagnosedaten durch den Netzwerk-Slice-Fähigkeits-Aktivierungsserver (301) gegenüber dem vertikalen Anwendungsschicht-Server (401), das System oder Telekommunikationsnetz (100) derart konfiguriert ist, dass:
- der vertikale Anwendungsschicht-Server (401) an den Netzwerk-Slice-Fähigkeits-Aktivierungsserver (301) eine Netzwerk-Slice-Diagnoseanforderung übermittelt, um mit Netzwerk-Slice-Diagnosedaten versorgt zu werden,
- der Netzwerk-Slice-Fähigkeits-Aktivierungsserver (301) an den vertikalen Anwendungsschicht-Server (401) eine Netzwerk-Slice-Diagnoseantwort übermittelt, die die Netzwerk-Slice-Diagnosedaten umfasst,
wobei der erste und der zweite Schritt die Verwendung der folgenden Informationselemente zwischen dem vertikalen Anwendungsschicht-Server (401) und dem Netzwerk-Slice-Fähigkeits-Aktivierungsserver (301) beinhalten:
- als Teile der Netzwerk-Slice-Diagnoseanforderung: eine vertikale Anwendungsschicht-Information oder vertikale Anwendungsschicht-Server-Bezeichner-Information, eine Netzwerk-Slice-Diagnose-Bezeichner-Information, eine Dienst-Degradierungstyp-Information, eine vertikale Anwendungsschicht-Dienst-Identitätsinformation, eine Fehlerlisten-Information, eine Fehlername-Information, eine netzwerkscheibenbezogene Bezeichner-Information, eine Startzeitinformation und eine Endzeitinformation,
- als Teil der Netzwerk-Slice-Diagnoseantwort: eine Ergebnisinformation,
wobei der erste und der zweite Schritt optional die Verwendung der folgenden Informationselemente zwischen dem vertikalen Anwendungsschicht-Server (401) und dem Netzwerk-Slice-Fähigkeits-Aktivierungsserver (301) beinhalten:
- als Teile der Netzwerk-Slice-Diagnoseanforderung: eine gerätebezogene Bezeichner-Information und eine Interessensgebiet-Information,
- als Teile der Netzwerk-Slice-Diagnoseantwort: für den Fall, dass die Netzwerk-Slice-Diagnose erfolgreich durchgeführt wurde, die Netzwerk-Slice-Diagnose-Bezeichner-Information, eine Startzeitinformation, eine Endzeitinformation, eine Datentypinformation, eine Datenausgabeinformation, und/oder, für den Fall, dass die Durchführung der Netzwerk-Slice-Diagnose fehlgeschlagen ist, eine Fehlerursachen-Information,
wobei die Dienst-Aktivierungs-Architekturschicht für Vertikalen **dadurch gekennzeichnet ist, dass** sie eine Netzwerk-Slice-Fähigkeits-Aktivierungs-Datenspeicherfunktion (301") umfasst, wobei in einem dritten Schritt, der auf den ersten Schritt folgt und dem zweiten Schritt vorausgeht, der Netzwerk-Slice-Fähigkeits-Aktivierungsserver (301) an die Netzwerk-Slice-Fähigkeits-Aktivierungs-Datenspeicherfunktion, NDRF (301"), eine Netzwerk-Slice-Datenabrufanforderung übermittelt, um mit den durch die Netzwerk-Slice-Diagnoseanforderung angeforderten Netzwerk-Slice-Diagnosedaten versorgt zu werden, und die Netzwerk-Slice-Fähigkeits-Aktivierungs-Datenspeicherfunktion (301") an den Netzwerk-Slice-Fähigkeits-Aktivierungsserver (301) eine Netzwerk-Slice-Datenabrufantwort übermittelt, um dem Netzwerk-Slice-Fähigkeits-Aktivierungsserver (301) die Netzwerk-Slice-Diagnosedaten bereitzustellen.

6. Netzwerk-Slice-Fähigkeits-Aktivierungsserver (301), konfiguriert zur Verwendung in einem System nach Anspruch 5.

7. Programm, das einen Programmcode umfasst, der, wenn er teilweise auf einem Netzwerk-Slice-Fähigkeits-Aktivierungsserver (301) und teilweise auf einem vertikalen Anwendungsschicht-Server (401) ausgeführt wird, den Netzwerk-Slice-Fähigkeits-Aktivierungsserver (301) und den vertikalen Anwendungsschicht-Server (401) veranlasst, ein Verfahren nach einem der Ansprüche 1 bis 4 durchzuführen.

8. Computerlesbares Medium, das Anweisungen umfasst, die, wenn sie teilweise auf einem Netzwerk-Slice-Fähigkeits-Aktivierungsserver (301) und teilweise auf einem vertikalen Anwendungsschicht-Server (401) ausgeführt werden, den Netzwerk-Slice-Fähigkeits-Aktivierungsserver (301) und den vertikalen Anwendungsschicht-Server (401) veranlassen, ein Verfahren nach einem der Ansprüche 1 bis 4 durchzuführen.

## Revendications

1. Procédé d'utilisation d'une couche d'architecture de service habilitant pour les verticales, SEAL, dans une implémentation VAL, pour la fourniture de services de communication à un équipement utilisateur (20), à l'aide d'un serveur de couche d'application verticale (401) via un réseau de télécommunications (100), pour la prise en charge et la fourniture de données de diagnostic de tranche de réseau concernant au moins une tranche de réseau, l'équipement utilisateur (20) étant un équipement utilisateur de couche d'application verticale (20) comprenant un client de couche d'application verticale, client VAL, (21) et un client d'activation des capacités de tranche de réseau (22),
la couche d'architecture de service habilitant pour les verticales comprenant un serveur d'activation des capacités de tranche de réseau (301) responsable de ladite au moins une tranche de réseau,
une interface ou un point de référence (21") étant réalisé entre le serveur de couche d'application verticale (401) et le client de couche d'application verticale (21), et une autre interface ou un autre point de référence (22") étant réalisé entre le client d'activation des capacités de tranche de réseau (22) et le serveur d'activation des capacités de tranche de réseau (301),
l'équipement utilisateur (20) utilisant des services fournis par un fournisseur de services d'activation des capacités de tranche de réseau, ledit fournisseur de services d'activation des capacités de tranche de réseau comprenant le serveur d'activation des capacités de tranche de réseau (301) pour fournir des services à l'équipement utilisateur (20),
afin de prendre en charge et de fournir, par le serveur d'activation des capacités de tranche de réseau (301), des données de diagnostic de tranche de réseau vers le serveur de couche d'application verticale (401), le procédé comprend les étapes suivantes :
- lors d'une première étape, le serveur de couche d'application verticale (401) transmet au serveur d'activation des capacités de tranche de réseau (301) une requête de diagnostic de tranche de réseau afin d'obtenir des données de diagnostic de tranche de réseau,
- lors d'une deuxième étape, le serveur d'activation des capacités de tranche de réseau (301) transmet au serveur de couche d'application verticale (401) une réponse de diagnostic de tranche de réseau afin de recevoir les données de diagnostic de tranche de réseau, les première et deuxième étapes impliquant l'utilisation des éléments d'information suivants entre le serveur de couche d'application verticale (401) et le serveur d'activation des capacités de tranche de réseau (301) :
- en tant que parties de la requête de diagnostic de tranche de réseau : une information de couche d'application verticale ou une information d'identifiant de serveur de couche d'application verticale, une information d'identifiant de diagnostic de tranche de réseau, une information de type de dégradation de service, une information d'identité de service de couche d'application verticale, une information de liste d'erreurs, une information de nom d'erreur, une information d'identifiant relatif à la tranche de réseau, une information d'heure de début et une information d'heure de fin,
- en tant que partie de la réponse de diagnostic de tranche de réseau : une information de résultat,
les première et deuxième étapes impliquant optionnellement l'utilisation des éléments d'information suivants entre le serveur de couche d'application verticale (401) et le serveur d'activation des capacités de tranche de réseau (301) :
- en tant que parties de la requête de diagnostic de tranche de réseau : une information d'identifiant relatif à l'équipement utilisateur et une information de zone d'intérêt,
- en tant que parties de la réponse de diagnostic de tranche de réseau : dans le cas où le diagnostic de tranche de réseau a été effectué avec succès, l'information d'identifiant de diagnostic de tranche de réseau, une information d'heure de début, une information d'heure de fin, une information de type de données, une information de sortie de données, et/ou, dans le cas d'un échec de l'exécution du diagnostic de tranche de réseau, une information de cause d'échec,
le procédé étant **caractérisé en ce que** la couche d'architecture de service habilitant pour les verticales comprend une fonction de référentiel de données d'activation des capacités de tranche de réseau (301"), dans laquelle, lors d'une troisième étape consécutive à la première étape et précédant la deuxième étape, le serveur d'activation des capacités de tranche de réseau (301) transmet à la fonction de référentiel de données d'activation des capacités de tranche de réseau, NDRF (301"), une requête de récupération de données de tranche de réseau afin d'obtenir les données de diagnostic de tranche de réseau demandées par la requête de diagnostic de tranche de réseau, et la fonction de référentiel de données d'activation des capacités de tranche de réseau (301") transmet au serveur d'activation des capacités de tranche de réseau (301) une réponse de récupération de données de tranche de réseau afin de fournir au serveur d'activation des capacités de tranche de réseau (301) les données de diagnostic de tranche de réseau demandées par la requête de diagnostic de tranche de réseau.

2. Procédé selon la revendication 1, dans lequel le serveur de couche d'application verticale (401) correspond à une entité consommatrice de services d'activation des capacités de tranche de réseau.

3. Procédé selon l'une des revendications précédentes, dans lequel la couche d'architecture de service habilitant pour les verticales comprend un serveur d'activation de l'analytique des données d'application (302), dans lequel, préalablement à la première étape, et lors de l'instanciation de ladite au moins une tranche de réseau ou sur demande du serveur de couche d'application verticale (401), le serveur d'activation des capacités de tranche de réseau (301) ou la fonction de référentiel de données d'activation des capacités de tranche de réseau (301") s'abonne au serveur d'activation de l'analytique des données d'application (302) au moyen d'une requête d'abonnement à l'analytique d'utilisation de tranche de réseau,
dans lequel, sur la base d'un tel abonnement, le serveur d'activation des capacités de tranche de réseau (301) ou la fonction de référentiel de données d'activation des capacités de tranche de réseau (301") reçoit des données d'analytique d'utilisation de tranche de réseau,
dans lequel ces données d'analytique d'utilisation de tranche de réseau et les événements correspondants sont enregistrés dans la fonction de référentiel de données d'activation des capacités de tranche de réseau (301").

4. Procédé selon l'une des revendications précédentes, dans lequel, lors d'une quatrième étape consécutive à la troisième étape, le serveur d'activation des capacités de tranche de réseau (301) corrèle des données et prépare un rapport de diagnostic de tranche de réseau, à fournir, en tant que partie de la réponse de diagnostic de tranche de réseau (604), au serveur de couche d'application verticale (401).

5. Système d'utilisation d'une couche d'architecture de service habilitant pour les verticales, SEAL, dans une implémentation VAL, pour la fourniture de services de communication à un équipement utilisateur (20), à l'aide d'un serveur de couche d'application verticale (401) via le réseau de télécommunications (100), pour la prise en charge et la fourniture de données de diagnostic de tranche de réseau concernant au moins une tranche de réseau, le système comprenant le serveur de couche d'application verticale (401) et un serveur d'activation des capacités de tranche de réseau (301), l'équipement utilisateur (20) étant un équipement utilisateur de couche d'application verticale (20) comprenant un client de couche d'application verticale, client VAL, (21) et un client d'activation des capacités de tranche de réseau (22),
la couche d'architecture de service habilitant pour les verticales comprenant le serveur d'activation des capacités de tranche de réseau (301) responsable de ladite au moins une tranche de réseau,
une interface ou un point de référence (21") étant réalisé entre le serveur de couche d'application verticale (401) et le client de couche d'application verticale (21), et une autre interface ou un autre point de référence (22") étant réalisé entre le client d'activation des capacités de tranche de réseau (22) et le serveur d'activation des capacités de tranche de réseau (301),
l'équipement utilisateur (20) utilisant des services fournis par un fournisseur de services d'activation des capacités de tranche de réseau, ledit fournisseur de services d'activation des capacités de tranche de réseau comprenant le serveur d'activation des capacités de tranche de réseau (301) pour fournir des services à l'équipement utilisateur (20),
afin de prendre en charge et de fournir, par le serveur d'activation des capacités de tranche de réseau (301), des données de diagnostic de tranche de réseau vers le serveur de couche d'application verticale (401), le système ou réseau de télécommunications (100) est configuré de sorte que :
- le serveur de couche d'application verticale (401) transmet au serveur d'activation des capacités de tranche de réseau (301) une requête de diagnostic de tranche de réseau afin d'obtenir des données de diagnostic de tranche de réseau,
- le serveur d'activation des capacités de tranche de réseau (301) transmet au serveur de couche d'application verticale (401) une réponse de diagnostic de tranche de réseau comprenant les données de diagnostic de tranche de réseau,
les première et deuxième étapes impliquant l'utilisation des éléments d'information suivants entre le serveur de couche d'application verticale (401) et le serveur d'activation des capacités de tranche de réseau (301) :
- en tant que parties de la requête de diagnostic de tranche de réseau : une information de couche d'application verticale ou une information d'identifiant de serveur de couche d'application verticale, une information d'identifiant de diagnostic de tranche de réseau, une information de type de dégradation de service, une information d'identité de service de couche d'application verticale, une information de liste d'erreurs, une information de nom d'erreur, une information d'identifiant relatif à la tranche de réseau, une information d'heure de début et une information d'heure de fin,
- en tant que partie de la réponse de diagnostic de tranche de réseau : une information de résultat,
les première et deuxième étapes impliquant optionnellement l'utilisation des éléments d'information suivants entre le serveur de couche d'application verticale (401) et le serveur d'activation des capacités de tranche de réseau (301) :
- en tant que parties de la requête de diagnostic de tranche de réseau : une information d'identifiant relatif à l'équipement utilisateur et une information de zone d'intérêt,
- en tant que parties de la réponse de diagnostic de tranche de réseau : dans le cas où le diagnostic de tranche de réseau a été effectué avec succès, l'information d'identifiant de diagnostic de tranche de réseau, une information d'heure de début, une information d'heure de fin, une information de type de données, une information de sortie de données, et/ou, dans le cas d'un échec de l'exécution du diagnostic de tranche de réseau, une information de cause d'échec,
la couche d'architecture de service habilitant pour les verticales étant **caractérisée en ce qu'**elle comprend une fonction de référentiel de données d'activation des capacités de tranche de réseau (301"), dans laquelle, lors d'une troisième étape consécutive à la première étape et précédant la deuxième étape, le serveur d'activation des capacités de tranche de réseau (301) transmet à la fonction de référentiel de données d'activation des capacités de tranche de réseau, NDRF (301"), une requête de récupération de données de tranche de réseau afin d'obtenir les données de diagnostic de tranche de réseau demandées par la requête de diagnostic de tranche de réseau, et la fonction de référentiel de données d'activation des capacités de tranche de réseau (301") transmet au serveur d'activation des capacités de tranche de réseau (301) une réponse de récupération de données de tranche de réseau afin de fournir au serveur d'activation des capacités de tranche de réseau (301) les données de diagnostic de tranche de réseau.

6. Serveur d'activation des capacités de tranche de réseau (301) configuré pour être utilisé dans un système selon la revendication 5.

7. Programme comprenant un code de programme lisible par ordinateur qui, lorsqu'il est exécuté en partie sur un serveur d'activation des capacités de tranche de réseau (301) et en partie sur un serveur de couche d'application verticale (401), amène le serveur d'activation des capacités de tranche de réseau (301) et le serveur de couche d'application verticale (401) à exécuter un procédé selon l'une des revendications 1 à 4.

8. Support lisible par ordinateur comprenant des instructions qui, lorsqu'elles sont exécutées en partie sur un serveur d'activation des capacités de tranche de réseau (301) et en partie sur un serveur de couche d'application verticale (401), amènent le serveur d'activation des capacités de tranche de réseau (301) et le serveur de couche d'application verticale (401) à exécuter un procédé selon l'une des revendications 1 à 4.
